# EUROPÄISCHE PATENTSCHRIFT

(11) **EP 1 975 451 B1**
(45) Veröffentlichungstag und Bekanntmachung des Hinweises auf die Patenterteilung: **24.03.2010**
(21) Anmeldenummer: 08001158.8
(22) Anmeldetag: 23.01.2008
(51) Int. Cl.: F16D 65/78, F16D 65/12

(54) **Zusammengesetzte Bremsscheibe mit thermischer Isolierung**
Compound brake disc with thermal isolation
Disque de frein composé doté d'une isolation thermique

(30) Priorität: 30.03.2007 DE 202007004780 U
(43) Veröffentlichungstag der Anmeldung: 01.10.2008
(73) Patentinhaber: AUDI AG, 85045 Ingolstadt (DE)
(72) Erfinder: Wittke, Christian, 86633 Neuburg a.d. Donau (DE); Wüllner, Andreas, 81247 München (DE); Reulein, Harald, 86750 Megesheim (DE)
(74) Vertreter: Asch, Konrad

(56) Entgegenhaltungen:
- EP-A- 0 474 877
- EP-A- 1 013 956
- EP-A- 1 013 957
- DE-U1- 29 906 138

## Beschreibung

Die Erfindung betrifft eine zusammengesetzte Bremsscheibe umfassend einen Bremsscheibentopf und einen Reibring, die durch Befestigungsmittel miteinander verbunden sind, siehe z.B. EP-A-1 013 956.

Der Bremsscheibentopf bewirkt die Verbindung zwischen Reibring und Welle und ist an der letzteren lösbar befestigt.
Da beim Bremsen kinetische Energie durch Reibung in Wärme umgewandelt wird und diese durch den meist metallischen Topf auf die Welle weitergeleitet wird, werden die benachbarten Lager thermisch hoch beansprucht.
Insbesondere im Falle von keramischen Reibringen moderner Bremssysteme werden sehr große Wärmemengen in kurzer Zeit erzeugt. Dies stellt besondere Probleme für die verwendeten Werkstoffe und erfordert eine effiziente Kühlung.

Es besteht daher die Aufgabe, die Einleitung von Wärme in den Bereich der Welle möglichst zu minimieren.
Bei einer thermischen Trennung von Reibring und Bremsscheibentopf ist jedoch zu beachten, dass das übertragene Moment zwischen diesen beiden Bauteilen nicht oder nur möglichst wenig vermindert wird.

Es wurde gefunden, dass Zwischenscheiben aus Keramik, vorzugsweise einer gesinterten Keramik, zwischen Reibring und Bremsscheibentopf eingebracht werden können, und die übliche Verbindungstechnik mit Hilfe von Schrauben oder Nieten angewandt werden kann, und damit eine weitgehende thermische Entkopplung von Reibring und Bremsscheibentopf erreicht werden kann, ohne das übertragene Moment ungünstig zu beeinflussen.

Dabei wurde in überraschender Weise festgestellt, dass bei Verwendung von Zwischenscheiben aus vorzugsweise gesinterter Keramik die sogenannte Schirmung des Reibrings, eine Verformung des Zylinderringes in Gestalt eines Kegelmantels, oder eines mit Wellen versehenen Kegelmantels, durch die unterschiedliche thermische Ausdehnung von Reibring und Bremsscheibentopf wirksam unterdrückt werden kann.
Die zusammengesetzte Bremsscheibe ermöglicht eine besonders wirksame thermische Isolierung zwischen Reibring und Bremsscheibentopf.

Ein weiterer günstiger Effekt hat sich durch die elektrische Isolierung der durch den Gehalt an Verstärkungsfasern aus Kohlenstoff leitfähigen keramischen Reibringe aus mit derartigen C-Fasern verstärkter Siliciumcarbid-Keramik ergeben: der ansonsten in Gegenwart von Salzlösungen beobachtete korrosive Angriff auf Reibring oder Bremsscheibentopf wird durch die elektrisch nichtleitenden keramischen Zwischenscheiben deutlich vermindert.

Gegenstand der Neuerung sind daher zusammengesetzte Bremsscheiben umfassend einen Bremsscheibentopf und einen Reibring, insbesondere einen Reibring aus einem faserverstärkten Keramikwerkstoff, die durch Befestigungsmittel miteinander verbunden sind, dadurch gekennzeichnet, dass zwischen dem Bremsscheibentopf und dem Reibring Zwischenscheiben aus einer vorzugsweise gesintertem Keramik angeordnet sind derart, dass sich der Bremsscheibentopf und der Reibring nicht unmittelbar berühren.

In einer weiteren bevorzugten Ausführungsform sind die Zwischenscheiben so ausgebildet, dass ein Verdrehen während der Montage oder während des Betriebs vermieden wird. Dazu wird anstelle einer zylindrischen Bohrung ein Langloch in die Zwischenscheibe eingebracht, und die Hülse weist eine entsprechende Form auf, die ein Verdrehen verhindert.

Die Erfindung wird durch die Zeichnungen erläutert. Dabei zeigen
- **Figur 1**: eine perspektivische Darstellung einer zusammengesetzte Bremsscheibe mit Zwischenscheiben,
- **Figur 2**: eine perspektivische Darstellung eines Ausschnitts des Bremsscheibentopfs mit abgenommenem Reibring, wobei die Zwischenscheibe und die Verdrehsicherung zu erkennen sind, und
- **Figur 3**: eine Draufsicht auf eine erfindungsgemäße Zwischenscheibe.

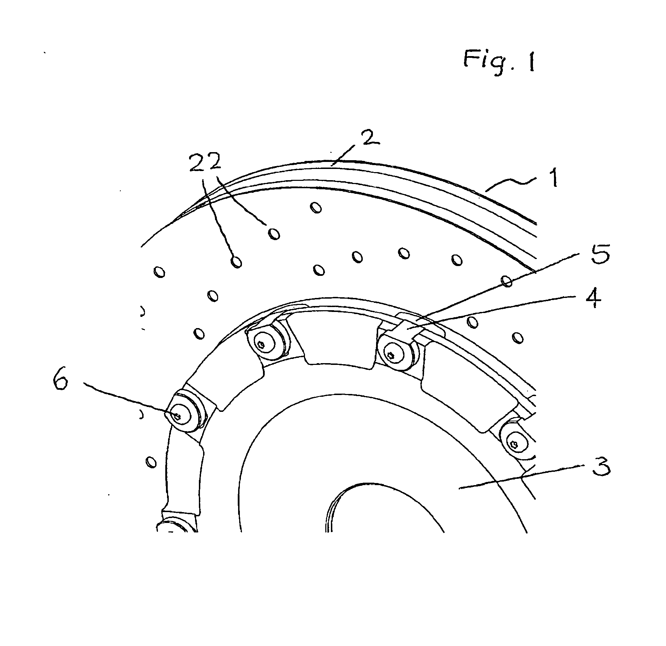

Im Einzelnen zeigt die Fig. 1 eine zusammengesetzte Bremsscheibe umfassend einen Reibring 2 mit Perforationsbohrungen 22 und einen Bremsscheibentopf 3, an dem der Reibring mit Hilfe von Nutsteinen 4, Schrauben 6 und hier nicht dargestellten Muttern 7 auf der gegenüberliegenden Seite des Reibrings 2 befestigt ist. Der Reibring 2 hat die Form eines Zylinderringes. Zwischen dem Bremsscheibentopf 3 und dem Reibring 2 sind die Zwischenscheiben 5 angeordnet.

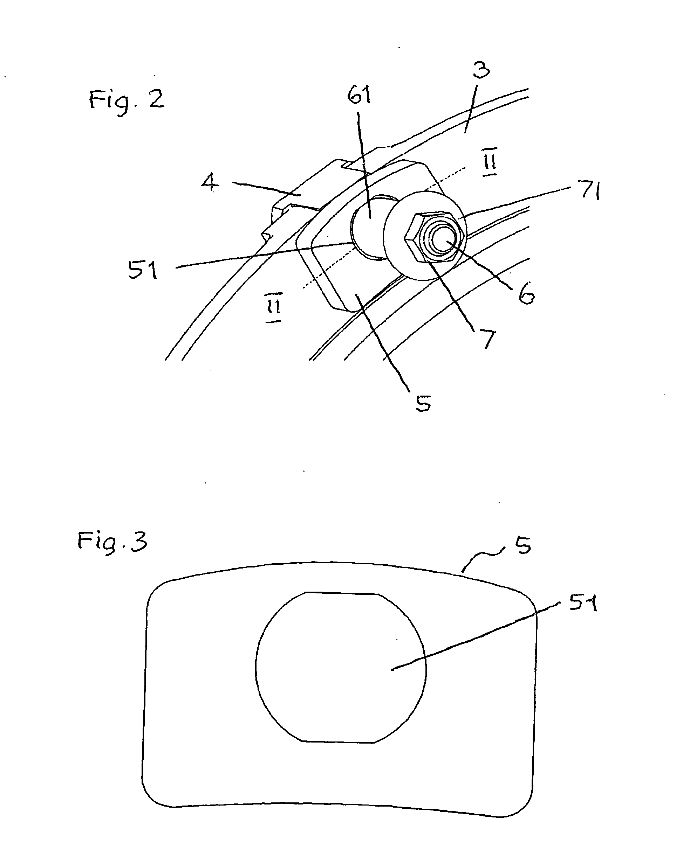

Die Verdrehsicherung wird in der Fig. 2 dargestellt, in der der Aufbau von der gegenüberliegenden Seite gezeigt ist und der Reibring der Übersichtlichkeit halber entfernt ist. Um die hier teilweise verdeckte Schraube 6 ist eine Hülse 61 angeordnet, unter der Mutter 7 ist eine Beilagscheibe 71 dargestellt. Das dem Schraubenkopf abgewandte Ende der Hülse 61, die an dieser Stelle eine zu dem Langloch passende Abflachung aufweist, greift so in das Langloch 51 der Zwischenscheibe 5 ein, dass diese am Verdrehen gehindert ist.

Eine Draufsicht auf eine Zwischenscheibe 5 ist in der Fig. 3 dargestellt, aus der eine bevorzugte Ausführungsform für Lage und Form des Langlochs 51 zu entnehmen sind.

Das Material der Zwischenscheibe ist ein keramischer Werkstoff, der vorzugsweise gesintert ist. Besonders günstig sind silikatkeramische Werkstoffe wie Porzellane oder Steatit, und oxidkeramische Werkstoffe, beispielsweise Aluminiumoxid, Zirkonoxid, sowie Mischoxid-Werkstoffe, die mindestens einen Massenanteil von 15 %, bevorzugt mindestens 25 %, an Aluminiumoxid enthalten. Besonders bevorzugt werden Aluminiumoxid-Werkstoffe mit einem Massenanteil von mindestens 80 % an Aluminiumoxid eingesetzt.

Besonders günstige Eigenschaften wurden gefunden, wenn die Dicke der Zwischenscheibe zwischen 2 mm und 8 mm beträgt. Ebenso ist es günstig, wenn die Erstreckung der Zwischenscheibe in Umfangsrichtung (perimetrische Erstreckung) zwischen einem Zehntel und einem Vierzigstel des Umfangs in der Mitte der Zwischenscheibe beträgt. Dabei wird jeweils der Umfang des Bremsscheibenrings und die Erstreckung (Länge) der Zwischenscheibe in der Mitte der Zwischenscheibe bestimmt, also bei demjenigen Radius des Bremsscheibenrings, der das Langloch 51 der montierten Zwischenscheibe in der Hälfte teilt. Dieser Umfang ist in der Fig. 2 als Hilfslinie II - II eingezeichnet.

Wählt man die Abmessungen einer Zwischenscheibe beispielsweise aus gesintertem Aluminiumoxid (Wärmeleitfähigkeit im Bereich von Raumtemperatur bis 100°C von ca. 15 W/m·K bis ca. 25 W/m·K) entsprechend diesen bevorzugten Bereichen, so ließen sich in Bremsversuchen eine Absenkung der nach jeweils 12 Vollbremsungen aus einer Umdrehungsgeschwindigkeit entsprechend einer Fahrzeuggeschwindigkeit von 150 km/h bis zum Stillstand bestimmten Temperatur von 220 °C (ohne Zwischenscheibe) gemessen an der Aufhängung des Bremsscheibentopf bis auf 140 °C erreichen (Dicke der Zwischenscheibe im Bereich von 4 mm bis 7 mm, perimetrische Erstreckung zwischen einem Zwanzigstel und einem Dreißigstel des Umfangs). Bei Über- oder Unterschreiten der bevorzugten Bereiche ist eine Absenkung von höchstens 20 K gegenüber dem Ausgangswert zu erreichen.

## Patentansprüche

1. Zusammengesetzte Bremsscheibe (1) umfassend einen Bremsscheibentopf (3) und einen Reibring (2), die durch Befestigungsmittel miteinander verbunden sind,
**dadurch gekennzeichnet,**
**dass** zwischen dem Bremsscheibentopf (3) und dem Reibring (2) Zwischenscheiben (5) aus einem keramischen Werkstoff angeordnet sind derart, dass sich der Bremsscheibentopf (3) und der Reibring (2) nicht unmittelbar berühren.

2. Zusammengesetzte Bremsscheibe nach Anspruch 1,
**dadurch gekennzeichnet,**
**dass** der Reibring (2) aus einer faserverstärkten Keramik besteht.

3. Zusammengesetzte Bremsschreibe nach Anspruch 1,
**dadurch gekennzeichnet,**
**dass** der Reibring (2) aus einer mit Fasern aus Kohlenstoff verstärkten Siliciumcarbid-Keramik besteht.

4. Zusammengesetzte Bremsscheibe nach Anspruch 1,
**dadurch gekennzeichnet,**
**dass** die Dicke der Zwischenscheibe (5) 2 mm bis 8 mm beträgt.

5. Zusammengesetzte Bremsscheibe nach Anspruch 1,
**dadurch gekennzeichnet,**
**dass** die perimetrische Erstreckung der Zwischenscheibe (5) zwischen einem Zehntel und einem Verzigstel des Umfangs des Reibrings (2) in der Mitte der Zwischenscheibe (5) beträgt.

6. Zusammengesetzte Bremsscheibe nach einem oder mehreren der Ansprüche 1 bis 5,
**dadurch gekennzeichnet,**
**dass** die Zwischenscheiben (5) aus einem gesinterten keramischen Werkstoff bestehen.

7. Zusammengesetzte Bremsscheibe nach Anspruch 6,
**dadurch gekennzeichnet,**
**dass** das Material der Zwischenschreiben (5) gesintertes Aluminiumoxid ist.

8. Zusammengesetzte Bremsscheibe nach Anspruch 1,
**dadurch gekennzeichnet,**
**dass** die Zwischenscheiben (5) so ausgebildet sind, dass ein Verdrehen während der Montage oder während des Betriebs vermieden wird.

## Claims

1. Compound brake disc (1), comprising a brake disc hub (3) and a friction ring (2) which are connected to one another by fastening means, **characterised in that** intermediate plates (5) made of a ceramic material are arranged between the brake disc hub (3) and the friction ring (2) in such a manner that the brake disc hub (3) and the friction ring (2) are not in direct contact with one another.

2. Compound brake disc according to Claim 1, **characterised in that** the friction ring (2) consists of a fibre-reinforced ceramic.

3. Compound brake disc according to Claim 1, **characterised in that** the friction ring (2) consists of a silicon carbide ceramic reinforced with carbon fibres.

4. Compound brake disc according to Claim 1, **characterised in that** the thickness of the intermediate plate (5) is from 2 mm to 8 mm.

5. Compound brake disc according to Claim 1, **characterised in that** the perimetric extension of the intermediate plate (5) is from one-tenth to one-fortieth of the circumference of the friction ring (2) at the centre of the intermediate plate (5).

6. Compound brake disc according to one or more of Claims 1 to 5, **characterised in that** the intermediate plates (5) consist of a sintered ceramic material.

7. Compound brake disc according to Claim 6, **characterised in that** the material of the intermediate plates (5) is a sintered aluminium oxide.

8. Compound brake disc according to Claim 1, **characterised in that** the intermediate plates (5) are so configured that rotation thereof during assembly or during operation is prevented.

## Revendications

1. Disque de freinage composé (1) comportant une cavité (3) et un anneau de friction (2), lesquels sont reliés entre eux par des moyens de fixation,
**caractérisé en ce**
**que** sont disposés entre la cavité du disque de freinage (3) et l'anneau de friction (2) des disques intermédiaires (5) composés d'une matière céramique de telle sorte que la cavité du disque de freinage (3) et l'anneau de friction (2) ne se touchent pas directement.

2. Disque de freinage composé selon la revendication 1,
**caractérisé en ce**
**que** l'anneau de friction (2) se compose d'une céramique renforcée par fibres.

3. Disque de freinage composé selon la revendication 1,
**caractérisé en ce**
**que** l'anneau de friction (2) se compose d'une céramique en carbure de silicium renforcée par des fibres de carbone.

4. Disque de freinage composé selon la revendication 1,
**caractérisé en ce**
**que** l'épaisseur du disque intermédiaire (5) est comprise entre 2 mm et 8 mm.

5. Disque de freinage composé selon la revendication 1,
**caractérisé en ce**
**que** le périmètre du disque intermédiaire (5) en son centre est compris entre un dixième et un quarantième de la périphérie de l'anneau de friction (2).

6. Disque de freinage composé selon l'une quelconque ou plusieurs des revendications 1 à 5,
**caractérisé en ce**
**que** les disques intermédiaires (5) se composent d'une matière céramique frittée.

7. Disque de freinage composé selon la revendication 6,
**caractérisé en ce**
**que** le matériau des disques intermédiaires (5) est de l'oxyde d'aluminium fritté.

8. Disque de freinage composé selon la revendication 1,
**caractérisé en ce**
**que** les disques intermédiaires (5) sont réalisés de telle manière qu'on évite une torsion lors du montage ou du fonctionnement.
